# EUROPÄISCHE PATENTSCHRIFT

(11) **EP 1 062 092 B1**
(45) Veröffentlichungstag und Bekanntmachung des Hinweises auf die Patenterteilung: **27.04.2005**
(21) Anmeldenummer: 99950724.7
(22) Anmeldetag: 14.10.1999
(51) Int. Cl.: B32B 13/12, B32B 13/14, B32B 18/00, E04C 2/26

(54) **STEINGUTTRÄGER**
EARTHENWARE SUPPORT
SUPPORT POUR MATERIAU DU TYPE PIERRE OU CERAMIQUE

(30) Priorität: 20.10.1998 DE 29818660 U
(43) Veröffentlichungstag der Anmeldung: 27.12.2000
(73) Patentinhaber: Kuse, Mera, 81925 München (DE); Brauner, Siegfried, 86660 Tapfheim (DE)
(72) Erfinder: Kuse, Mera, 81925 München (DE); Brauner, Siegfried, 86660 Tapfheim (DE)
(86) Internationale Anmeldenummer: PCT/EP1999/007739
(87) Internationale Veröffentlichungsnummer: WO 2000/023272

(56) Entgegenhaltungen:
- EP-A- 0 698 483
- GB-A- 2 129 368
- US-A- 3 723 233

## Beschreibung

Die vorliegende Erfindung bezieht sich auf die Stabilisierung von Steingut im weiteren Sinn, das heißt Naturstein, Kunststein und sonstiges Steingut, sowie Keramik bis hin zu glashaltigen Substanzen, welche sich besonders durch eine hohe Druckstabilität und Druckfestigkeit auszeichnen. Hier sind besonders Natursteine wie Granit, granitähnliche Gesteine wie Gneis, Marmor, Kalkstein, hochfeste moderne Keramiken, Glaskeramik oder Glas zu erwähnen, sowie alle sonstigen Materialien aus Stein oder Keramik, natürlicher oder künstlich hergestellter Perlmutt und Korallenbaustoff, die hoch druckbelastbar sind und insbesondere dadurch gekennzeichnet sind, daß sie einen geringen Ausdehnungskoeffizienten besitzen, sowohl was die Temperatur-, als auch was die Druck- bzw. Zugdehnungskoeffizienten betrifft.
Diese Materialien zeichnen sich zwar einerseits durch eine hohe Belastbarkeit bei Druckbeanspruchung aus, sind dagegen aber fast völlig instabil bei Zug- und Biegebelastung.

Bisher hat Stein und Keramik vorwiegend im Baubereich in massiver Verarbeitungsweise Wände, Wandverkleidungen und Fußböden Verwendung gefunden, sowie in hochspezialisierten technischen Anwendungen mit technischen Keramiken, wie z.B. im Turbinenbau oder Motorenbau und anderen extremen Anwendungsfällen, die eine hohe Temperaturstabilität erfordern.

Die vorliegende Erfindung schlägt nun einen Weg vor, Stein oder Keramiken als alternatives Material für die Herstellung von solchen Bauteilen zu benutzen, die bisher typischerweise aus Metall hergestellt werden, und insbesondere die hohe Druckfestigkeit von geeigneten Steinen und Keramiken für allgemeinere industrielle Anwendungen auf preiswerte Weise nutzbar zu machen. Um das zu erreichen ist es zwingend nötig, den Stein oder die Keramik gegen Zug und damit verbundenen Bruch zu stabilisieren. Einen solchen Weg schlägt die Erfindung vor. Der Weg gewährleistet, daß sowohl Stein, als auch Keramik unter den unterschiedlichsten mechanischen Belastungen so stabilisiert wird, daß sie durch eine, für die jeweiligen Einsatz- und Belastungsfälle geeignete, Stabilisierung vor mechanischer Zerstörung einerseits, aber insbesondere auch vor thermisch bedingter Zerstörung geschützt werden.
Dabei entsteht ein neuer Werkstoff mit völlig neuen, bisher unbekannten und für viele Anwendungsfälle außergewöhnlich positiven Eigenschaften, der nicht nur höchstem Druck, sondern auch extremen Belastungsfällen durch Biegung, Torsion und Wärmeeinwirkung je nach Ausführung entweder absolut formstabil standhält, oder, und diese Eigenschaft ist unerwartet ausgeprägt, bei geeigneter Ausführung der Stabilisierung der Stein extrem biegbar wird, ohne daß der Stein zerstört wird und nach der Beanspruchung durch die Biegung unzerstört und nicht gebrochen in die Ausgangsform zurückgeht. Somit wird der Stein zu einem flexiblen, mechanisch verformbaren, biege- und schwingungsbelastbaren Material, bei höherer Stabilität als ein bezüglich des Gewichts vergleichbares Stahlbauteil.

Eine weitere wesentliche Eigenschaft dieses neuen Werkstoffes ist die Resistenz gegen geometrische Veränderung durch thermische Belastung, sowie die Zerstörungs- und Verformungsfreiheit des Steins oder der Keramik bei Schockeinwirkung.

Ein drittes, für neue Werkstoffe wünschenswertes Merkmal sollte sein, daß diese preiswert und umweltschonend in der Herstellung sind. Stein ist auf der Erde in fast unbegrenztem Maß mit den unterschiedlichsten mechanischen Eigenschaften vorhanden und preiswert an der Erdoberfläche zu gewinnen und relativ unaufwendig durch Schneiden mit Wasserstrahl zum Beispiel in die geeignete Form zu bringen. Ebenso können Keramiken preiswert in den unterschiedlichsten Formen hergestellt werden.

Kern der Lösung für den industriell nutzbaren Einsatzes des Werkstoffs Stein und Keramik für mechanische Bauteile und deren Anwendungen ist nunmehr, das am besten geeignete Stabilisierungsmaterial für den Stein zu finden, sowie die beste Art und Weise, die beiden Werkstoffe, Stein und Stabilisierungsmaterial, optimal miteinander zu verbinden.

Die extreme Druckstabilität von Stein und Keramik kann in bestimmten Anwendungsfällen gegenüber anderen, für die Herstellung von Bauteilen verwendeten Materialien wie Metallen oder Kunststoffen von großem Vorteil sein, da Stahl und Kunststoff auf Druck oder Biegung recht schnell mit dem irreversiblen Nachgeben oder Brechen reagiert. Zusätzlich ist das geringe Elastizitätsmodul von Stein und Keramik von großem Vorteil, da man unter mechanischer, wie thermischer Belastung mit minimalen Längenänderungen von Bauteilen rechnen kann. Voraussetzung ist, daß der Stein geeignet stabilisiert wird, da Stein und auch Keramiken gegenüber den eben erwähnten Materialien den entscheidenden Nachteil haben, daß sie, anstatt sich zu verformen, sehr leicht irreversibel brechen. Der optimale Zustand für ein solches Bauteil ist im übrigen dann erreicht, wenn dieses weder durch thermische, noch durch mechanische Belastung überhaupt eine Längenänderung erfährt. Auch hier schlägt die Erfindung eine Lösung vor.

Voraussetzung für die Nutzung der vorteilhaften Eigenschaften von Stein ist also, daß der Stein für die Belastungsfälle, bei denen er weniger stabil ist, vorbereitet und entsprechend stabilisiert werden muss.

Der Stein ist wenig stabil unter Zugbelastung und beim Auftreten von Biege-, Scher- und Torsionskräften. Bei dieser Art von Belastung ist der Stein und die Keramik, zwar nach Sorte unterschiedlich, aber in der Regel eher sehr unstabil und spröde und neigt sehr leicht zum Brechen. Auch partielle Schockeinwirkung führt zum Abspringen von Ecken und Kanten, oder im Extremfall zum vollständigen Zerbröseln des Steins. Um dieser Eigenschaft sicher entgegenzuwirken, bedarf es einer extrem zugstabilen Vorspannung des Steins, die auch die geringste Überdehnung unter Belastung verhindert. Sofern ein Überdehnen durch Zugkräfte verhindert werden kann, bleibt der Stein absolut stabil und formtreu. Die geringste Überdehnung des Steins oder der Keramik führt jedoch an der Riss- oder Bruchstelle zu einer irreversiblen Zerstörung der Druckstabilität, die in der Regel unter weiterer Belastung schleichend fortschreitet. Um den Stein mit all seinen Vorzügen der Druckstabilität also sicher nutzen zu können, muss jegliche Überdehnung des Steins, sei sie auch noch so klein und auch nur ein einziges Mal, absolut verhindert und unterbunden werden. Selbst die kleinste singuläre Verletzung dieser Regel kann zum dauerhaft fortschreitenden Zerfall des Bauteils führen. Gelingt es jedoch eine Zugbeanspruchung des Steins sicher zu verhindern, gibt es kaum ein dauerhafteres und druckbeständig belastbareres Material als Stein oder Keramik.

Die Erfindung basiert auf der Stabilisierung von Stein oder Keramik durch ein flächig auf dem Stein angebrachtes carbonfaserhaltiges Trägermaterial, welches ermöglicht, das eigentliche Steinmaterial möglichst dünn bzw. leicht und materialsparend zu halten.
Bekannt sind bisher Leichtbauformen bei denen wie bei dieser neuen Erfindung auch eine möglichst dünne Natursteinschicht flächig durch einen Unterbau verschiedener Trägermaterialien und Trägerformen verstärkt und dadurch belastbar gemacht wird, beziehungsweise erst ermöglicht Steinplatten entsprechend dünn auszuführen. Das Trägermaterial ist dabei in der Regel bisher unter dem Gesichtspunkt ausgewählt worden, daß es bei ausreichender mechanischer Festigkeit hauptsächlich von Gewichtsersparnis bei Steinplatten im Fassadenbau oder Fußbodenbau bestimmt wird.
Es werden beispielsweise gewellte oder wabenförmige Metall- bzw. Aluminiumbleche als Trägermaterial verwendet, wobei eine dünne Steinschicht von 2-3mm nach dem Abstärken des ursprünglich 20 mm starken Materials auf diesem Träger verbleibt. Ein ähnliches Stabilisierungsverfahren ist die Verwendung von Glasfaser- oder Aramidfaserlaminaten, die den Stein stabilisieren, wobei die stabilisierende Schicht jedoch höchstens den gleichen Ausdehnungskoeffizienten hat, wie der zu stabilisierende Stein. Das Ergebnis ist eine druck- und zugspannungsbelastbare Platte, die in normalen Anwendungsfällen eine ausreichende Stabilisierung des Steins für Verkleidungsanwendungen im Innenbereich liefert.

Anders sieht es jedoch aus, wenn besondere Belastungen für die Steinoberfläche hinzukommen, insbesondere bei permanenter wärmebedingter Ausdehnungsbelastung oder extremer Biegebelastung, bei der sich die bekannten Trägermaterialien an einer Seite oder insgesamt ausdehnen und zum Aufreißen der Steinoberfläche der dünnen, durch das Abstärken auf 3 mm Dicke geschwächten und deshalb wenig zugbelastbaren Steinschicht führen können. Bei der Verwendung im Fußbodenbereich kann solch dünner Stein zusätzlich extrem hohen punktuellen mechanischen Belastungen, zum Beispiel durch Schuhabsätze oder im Außenbereich bei Fassadenverkleidungen extremen Wärmeunterschieden, sowie den Wechselwirkungen von Wasser und Frost ausgesetzt sein. In diesen Fällen ist eine verbesserte Stabilisierung der Steinpatte notwendig, die auch den thermisch/mechanisch bedingten Lastfall für den Stein zerstörungsfrei absichert.
Nicht durch den Stand der Technik beschrieben sind somit bisher Bauteile aus Stein oder Keramik, die extreme thermisch-statische, wie thermischdynamische Lasten aufnehmen können. Ferner sind nicht beschrieben selbsttragende Konstruktionen aus Stein für industriell nutzbare Anwendungen, bei denen vom Stein mehr verlangt wird als die Aufnahme reiner Druckbelastung, zum Beispiel am Bau und auf dem Boden, oder als rein verzierende Anwendung im Fassadenbereich. Nicht beschrieben sind ferner Maschinenbauteile aus faserstabilisiertem Stein oder Keramik.

Die Aufgabe, der Neigung von Naturstein oder Keramik zum Brechen oder Reißen sicher entgegenzuwirken, wird durch verbesserte stabilisierende Eigenschaften des Trägers gelöst. Zu diesem Zweck wird ein Trägermaterial eingesetzt, welches einen Ausdehnungskoeffizienten hat, der kleiner dem des zu stabilisierenden Steins oder der zu stabilisierenden Keramik, im folgenden Stein genannt, ist. Das Trägermaterial, im folgenden Träger genannt, besteht aus einer eine Faser umhüllenden Matrix, die ein Kunstharz oder gegebenenfalls selbst ein Keramikmaterial ist. Als Kern der Erfindung kommen Carbonfasern zum Einsatz, die hohen Zugbelastungen standhalten und sich unter Wärmeeinwirkung zusammenziehen, also einen negativen Temperaturausdehnungskoeffizienten besitzen. Dadurch wird insbesondere den durch Überdehnung und Hitzeeinwirkung entstehenden Rissen im Steingut entgegengearbeitet, sowie dem Bruch durch mechanische Belastung senkrecht auf das Steingut. Die positivste Eigenschaft von Stein, die durch die Erfindung genutzt wird, ist seine extreme Unempfindlichkeit gegen, und Unzerstörbarkeit durch Druck. Die nächst beste mechanische Eigenschaft für die Realisierung der Erfindung ist der geringe Ausdehnungskoeffizient von Stein und Keramik, thermisch und mechanisch. Beide Effekte zusammen werden von der Erfindung dafür genutzt, unter vielen Anwendungsfällen stabile und ausdehnungsarme Bauteile herzustellen. Die beiden beschriebenen Eigenschaften sind bedingt durch die Entstehungsgeschichte, die das Material im Laufe von Jahrmillionen unter höchsten Drücken und Temperaturen erst entstehen ließ, leicht zu erklären.
Die positiven Eigenschaften des Steins sind der Grund für seine negativen, hauptsächlich seine Neigung zu Brüchen und Rissbildung, die besonders durch punktuelle Zug-Beanspruchung mechanischer oder hitzebedingter Einwirkung hervorgerufen werden. Diese negativen Eigenschaften werden durch die Erfindung in einzigartiger Weise unterbunden und kompensiert. Die negativen Eigenschaften des Steins werden durch die Erfindung in positive Eigenschaften gewandelt.
Dünne Steinplatten werden durch die Erfindung insbesondere bei thermischer Belastung und der damit verbundenen Träger-Materialdehnung, die zu Rissen oder Oberflächenbrüchen des getragenen Stein-Materials führen würde, sicher gegen Rissbildung geschützt. Die üblicherweise entstehenden, unter Umständen mikroskopisch kleinen Haarrisse, die zum schnellen Verfall des Steins führen, insbesondere dann, wenn er im Außenbereich ständig wechselnden Temperaturen, Wasser und Frost ausgesetzt ist, werden durch die Erfindung vollständig ausgeschlossen. Selbst dünnste Steinplatten können mit Hilfe der Erfindung unter Beibehaltung ihrer Stabilität hergestellt werden, ohne beim Abstärken zu brechen. Auch die mechanische Beanspruchung, die bei Druckbelastung senkrecht auf den Stein ausgeübt werden, werden dehnungsfrei abgefangen, um den Stein gegen die gleiche Rissbildung, wie oben beschrieben, zu schützen. Besonders die Ausdehnung des Trägermaterials durch thermische Einwirkung ist nicht größer, als die des Steins selber. Dadurch wird vermieden, daß das dünne Steinmaterial durch die Trägerplatte auseinandergezogen wird.

Mit Hilfe des Einsatzes von zum Beispiel stabilen Epoxidharzen, Polyesterharzen, Harzen auf Phenol-, Polyimid-, Cyanatester-, Melamin-, Polyurethan- oder Silikonbasis, genannt Matrix, in Kombination mit Carbonfasern, die einen negativen Temperaturausdehnungskoeffizienten haben, wird eine solche sichere Stabilisierung von Stein oder Keramik für die oben beschriebenen Belastungs- und Einsatzfälle möglich. Kennzeichnend ist hierbei, daß der Faserverbund einen negativen thermischen Ausdehnungskoeffizient hat. Außerordentlich hilfreich für eine optimale Verbindung zwischen Stein und Faserverbund ist dabei die poröse und somit saugende Konsistenz von Stein. Ein Harz kann sich förmlich in den Stein saugen und führt so zu einer enorm stabilen Verbindung zwischen Stein und dem den Stein stabilisierenden Laminat. Wichtig ist dabei, daß das Harz bezüglich seiner Viskosität optimal den saugenden Eigenschaften des zu stabilisierenden Steins angepasst wird. Die sich gegenseitig stabilisierenden Komponenten "verschmelzen" dann regelrecht.
Eine saugende Eigenschaft haben zwar die meisten Steine, jedoch nicht alle Keramiken, deshalb kann es bei der Verwendung von Keramikmaterial notwendig sein, die Faser in der Oberfläche der Keramik mit einzugießen. Für nicht saugendes Steinmaterial, das sind zum Beispiel Steine mit einem hohen Quarzanteil, muss die Oberfläche unter Umständen aufgeraut werden, um eine ausreichend gute Haftung zu erzielen. Durch das Aufrauen können sich winzigste Öffnungen auftun, die das Harz eindringen lassen.

Kern des Schutzes vor temperaturbedingter Längenänderung des Bauteils kommt dabei Carbonfaser als Stabilisierungsmaterial der Matrix zu, die sich im Gegensatz zu üblichen Fasermaterialien bei Wärmeeinwirkung zusammenzieht. Carbonfaser hat diese Eigenschaft, die somit zum Kern der Erfindung wird, denn je höher das Laminat erhitzbar ist und unter dieser Hitzeeinwirkung aushärtet und den Spannungs-Zustand damit bei einer bestimmten Temperatur "einfriert", desto höher ist die nach Aushärtung erreichte Vorspannung, die der Stein erfährt, und um so höher damit die Belastbarkeit der Verbindung.
Wird die Carbonfaser mit anderen Fasern gemischt, die sich bei Wärme ausdehnen, so kann in einem weiten Temperaturbereich eine Längenänderung des Bauteils vollständig unterbunden werden. Mehr noch, durch die Verwendung von gleichen oder unterschiedlichen Fasern, in gleicher oder wechselnder Orientierung des Faserverlaufs und in einer oder in unterschiedlichen Schichten kann eine automatische Biegung des Steins, die zusätzlich durch die jeweilige Matrix temperaturabhängig eingestellt werden kann, erzwungen werden, ohne daß die Struktur des Steins Risse erhält und Schaden erleidet.
Zum wesentlichen Verständnis dieses Vorgangs muss erwähnt werden, daß Stein und Keramik fast grenzenlos gedrückt werden können. Hierbei finden minimale Längenänderungen statt. Die im Rahmen der Untersuchungen zu dieser Erfindung bedeutsame Erkenntnis ist, daß Stein, wie auch Keramik, komprimierbar sind, ohne zerstört zu werden. Dies ist die wohl wesentlichste Eigenschaft des Steins, die zum Gelingen der Erfindung führt, und erklärt, warum Stein in Grenzen biegbar ist ohne zerstört zu werden, sofern er nur auf die richtige, hier beschriebene Weise stabilisiert wird.

Der Stein kann also zerstörungsfrei in gewissen Grenzen gebogen werden. Diese wichtige Eigenschaft des Steins, nämlich zerstörungsfrei komprimierbar zu sein, in Kombination mit der sich bei Wärmebelastung zusammenziehenden und extrem hochreißfesten Carbonfaser, die einer Überdehnung des Steins entgegenwirkt, sofern die beiden Bauelemente fest miteinander verbunden sind, wird zum Gegenstand der Erfindung und zur Realisierung der Nutzung solcher Bauteile auch für dynamische Belastungsfälle. Somit ist ein neuer Werkstoff entstanden, der in vielen Einsatzfällen den Werkstoff Metall ersetzen kann und dabei noch wesentliche Vorteile mitbringt. Dies war bisher mit reinen Faserverbundwerkstoffen, sogenannten Laminaten, nicht in allen Fällen möglich. Der Grund ist, daß Laminate zwar sehr zugstabil, jedoch weniger druckstabil sind und unter Schockbelastung durch Druck spontan nachgeben und zersplittern. Die komplementär stabilisierende Wirkung des Carbonfaser-Stein-Verbundes ist ähnlich der einer Stahlbetonkonstruktion im Kleinen. Im Unterschied zu Beton ist Stein jedoch viel fester und druckbelastbarer und Carbonfaser viel zugstabiler als Stahl. Ausserdem zieht sich die Carbonfaser bei Wärme im Gegensatz zu Stahl zusammen und verstärkt die stabilisierende Wirkung durch den Druck auf den Stein. In der neuen Verbindung wird das Carbonfaserlaminat zum stabilisierenden Element für den Stein, und umgekehrt der Stein zum stabilisierenden Element des Laminates. Weder Stein, noch Carbonfaserlaminat sind biegestabil. Zusammen jedoch werden sie zu einer sich komplementär stabilisierenden Verbindung, die die Festigkeits-Eigenschaften von Metallen bei weitem übersteigt. Beispielsweise scheiterte die Verwendung von Laminaten für den Einsatz im Automobilbau, beispielsweise im Bodengruppenbereich, bisher daran, daß das Laminat in dynamischen Lastbereichen sowie bezüglich des Gewichts dem bisher verwendeten Stahl oder Aluminium zwar weit überlegen war, aber über keinerlei Stabilität im Falle der Stauchung durch einen Crash verfügte. Mit der Erfindung wird aus zweierlei Sicht eine Lösung geschaffen. Wenn man in dem Bereich, in dem sich in der Stahlkonstruktion der Bodengruppe eines Automobils der Längsträger befindet, nunmehr einen Keramik- oder Steinstab, der mit einem Carbonfaserlaminat stabilisiert ist, einsetzt, so werden drei Probleme auf einmal gelöst:
1. Bei gleichem Gewicht hat der carbonfaserstabilisierte Stein oder Keramikstab eine wesentlich höhere Druckstabilität, Biegesteifigkeit und ein kleineres Elastizitätsmodul als der Stahlträger. Dies bedeutet Gewichtsersparnis bei gleichzeitiger Steigerung der Festigkeit.
2. Die Verbindung des Längsträgers aus Stein zur übrigen Bodengruppe aus Laminat ist denkbar einfach durch Verklebung zu erreichen und wäre mit einem Stahlträger überhaupt nicht machbar, schon allein deshalb, weil der Stahl sich bei Temperaturerhöhung so ausdehnt, daß die Verbindung mit dem Laminat abreißt, da Stahl und Laminat nur mit unzureichender Haftung miteinander verklebt werden können.
3. Durch die Druckstabilität des Steins wird die Verformung der Fahrgastzelle beim Crash vollständig ausgeschlossen, was bei Stahl eigentlich gar nicht oder ansatzweise nur durch enorm schwere Konstruktionen erreicht werden kann, die im Automobilbau heute aus vielerlei Gründen nicht mehr verwendet werden können.

Auf die oben beschriebene Weise wird ein Fahrzeug aus Kunststoff unter heute geltenden Sicherheitsstandards für Crashtests erst möglich. Dabei muss gewährleistet sein, daß die Konstruktion sich auch bei Erwärmung des Automobils im Sommer nicht ausdehnen und damit zur Zerstörung des Steins führen kann. Aus diesem Grund kommt auch in diesem Anwendungsfall der zusammenziehenden Wirkung der Carbonfaser unter Wärme eine zentrale Bedeutung zu. Nur so ist gewährleistet, daß der Fahrer bei einem Crash sicher vor dem Zusammendrücken der Fahrgastzelle geschützt ist, ohne daß die Schockstabilität des Steins durch thermisch/mechanisch bedingte Zerfallserscheinungen durch den vorausgegangenen Wechsel von Sommern und Wintern bereits vermindert wurde.

Dies ist jedoch nur ein Anwendungsfall, in dem die Kombination Stein/Carbonfaser vorteilhaft eingesetzt werden kann. Andere Anwendungsfälle sind der klassische Einsatz des Steins als Bodenfliese, bei dem unter Umständen der Stabilisierung von Stein eine immer bedeutendere Rolle zukommt, da in jüngster Zeit mit unstabilisiertem Stein als Bodenplatten in hochbelasteten Zonen große Probleme beobachtet wurden. Dünne Wandverkleidungen aus Stein im Außenbereich benötigen ebenfalls eine hohe thermische und mechanische Stabilität, denn auch hier ist es in jüngster Vergangenheit zu erheblichen Problemen durch Witterungseinflüsse gekommen. Mit der beschriebenen Stabilisierung werden sogar dünne gebogene Steinplatten möglich, die so aussehen, als wären sie ein großer massiver Stein, der z.B. an einer Fassade als Wandverkleidung angebracht sein kann. Weitere Anwendungen ergeben sich bei der Verkleidung von Schiffs- oder Flugzeugrümpfen mit einer dünnen Steinschicht, die extrem wechselnden thermischen Belastungen ausgesetzt sind. Auf die Verwendung von Stahl kann man mit dieser Technik vollständig verzichtet werden, der Stein als Außenhaut hat außerdem einen wesentlich geringeren Luft-und Wasserreibungswiderstand.

Es wird darüber hinaus die Forderung erfüllt, die mechanische Belastbarkeit und Temperaturbelastbarkeit von dünnen bis dünnsten Steinverkleidungen so zu optimieren, daß der Gesamt-Ausdehnungskoeffizient der Platte in weiten Temperaturbereichen auf Null reduziert werden kann, um auch bei Außenfassaden eine zerstörungsfreie, das heißt ausdehnungsfreie Stabilisierung zu erreichen. Damit eine an einer Gebäudewand angebrachte, nahtlose Außenfassade entstehen kann, darf sich die Steinplatte unter Wärmeeinwirkung nicht ausdehnen. Der Stein erfährt dadurch, daß er durch die Trägerplatte beim Bestreben sich unter Wärme auszudehnen, gehindert wird, einen sehr hohen inneren Druck. Wie Ausführungen der Erfindung jedoch zeigen, sind Natursteine wie z.B. Granit aber so druckunempfindlich, daß dieser Zwang dem Stein erstaunlicherweise nicht schadet, sogar dann nicht, wenn der Stein durch die Stabilisierung vollkommen an einer thermisch bedingten Ausdehnung gehindert wird. Diese Erkenntnis ist vollkommen neu, wird nur bei ganz wenigen Materialien beobachtet und wird damit ebenso zum Kern der Erfindung, wie der selten beobachtete negative thermische Ausdehnungskoeffizient von Carbonfaser. Hier ist der Kern der Gründe dafür zu finden, warum die beiden Materialien in Verbindung ein so brauchbar gutes Ergebnis erzielen und sich auf so ideale Weise ergänzen..

Die Erfindung wird somit realisiert durch die Verwendung von möglichst druckbelastbarem Stein oder Keramik und einer Trägerschicht, die unter Hitzeeinwirkung kontrahiert.
Der Stein und die Keramik werden so auf äußere Krafteinwirkung allgemein und auch auf Temperatureinwirkung im speziellen durch die komplementär der Ausdehnung gegenwirkende Kraft, die durch den Carbonfaserträger erzielt wird, mechanisch gezwungen form- und oberflächenstabil zu bleiben. Sie erhalten dadurch nicht die geringste Möglichkeit zur Rissbildung.
Voraussetzung ist, daß diese gegenwirkende Kraft auf den Stein groß genug ist und entsprechend auch auf den Stein übertragen werden kann, ohne daß der Stein sich von der Carbonfaserschicht ablöst. Das heißt, daß die Verbindung zwischen Stein und Laminat so fest sein muss, daß die wirkenden Kräfte den Stein nicht vom Trägermaterial lösen können. Um dies zu erreichen wird eine Matrix gewählt, welche aufgrund der einzustellenden Viskosität möglichst tief in den Stein eindringen kann. Stein und Laminat müssen miteinander "verschmelzen", um einen optimalen Kraftschluss zu gewährleisten.

Dies kann auch dadurch erreicht werden, daß ein Keramikstab oder ein Keramikkörper verwendet wird, in dessen Oberfläche oder gegebenenfalls im gesamten Körper, unter mechanischen Gesichtspunkten geometrisch sinnvoll angeordnet, Carbonfaser gleich mit eingearbeitet wird.

Eine weitere Variante ist die Verwendung von Stein, der mit einer Schicht aus Keramik und Carbonfaser stabilisiert ist.
Keramik hat als Träger gegenüber Kunstharzen den Vorteil noch höher temperaturbelastbar zu sein. Hochtemperaturfeste Binder aus z.B. Wasserglass können die feste Verbindung zwischen Stein und Matrix aus Carbonfaser-Keramik herstellen.

Ein wesentlicher Vorteil der Erfindung ist somit neben der hohen Hitzeund Ausdehnungsbeständigkeit der Bauteile die gleichzeitige hohe Formstabilität, auch bei senkrecht zur Steinplattenebene einwirkendem Druck.
Da der Stein wenig zugstabil ist und sich aufgrund seiner Beschaffenheit mit Längenänderungen auch bei extremer Druckbelastung komprimieren lässt, liefert die Carbonfaser, die im Gegenteil dazu sehr zugstabil ist und sich bei entsprechender thermischer Behandlung zusammenzieht - damit also so gestaltet werden kann, daß sie dem Bauteil in weiten Temperaturbereichen eine Vorspannung gibt - , mit dieser komplementären Eigenschaft eine optimale Ergänzung der beiden Materialeigenschaften, die insgesamt drei neue Qualitäten gewährleistet:
Einerseits wird der Stein vor einer strukturzerstörenden Ausdehnung geschützt, wobei durch die Verhinderung der Ausdehnung, die üblicherweise insbesondere im Außenbereich durch wechselnde Temperaturen eine Materialermüdung und Steinzerstörung von dünnen Steinplatten mit Trägerschicht hervorruft, eine wesentlich längere Lebensdauer des Steins entsteht,
Andererseits erhält die Gesamtverbindung extreme Biegesteifigkeit bei senkrecht zur Platte auftretenden Druckbelastungen, wenn die Steinschicht sich auf der Seite befindet, von der die Kraft einwirkt. In diesem Fall wird der Stein zusammengedrückt und die Carbonfaserplatte nimmt auf der der Kraft abgewandten Seite der Platte die entstehenden Zugkräfte auf

Der sehr entscheidende dritte Vorteil ist, daß der Plattenverbund aus Stein und Carbonfaser sich extrem gut und formstabil bearbeiten, d.h. schneiden und fräsen lässt, und das insbesondere auch bei unterschiedlichen Temperaturen. Stahl im Gegensatz dazu hat nur dann die gewünschte Länge, wenn er bei der gleichen Temperatur geschnitten wird, die beim späteren Einsatz herrscht.

Die erstaunliche Biegsamkeit zum Beispiel eines runden, außen mit Carbonfaserlaminat stabilisierten Steinstabes zeigt, daß der Werkstoff Stein in stabilisierter Form technische technisch anwendbare >Eigenschaften besitzt, die im bisher bekannten Stand der Technik beispiellos sind. Neu ist die Beobachtung, daß auch nach extremer Durchbiegung der Stab ohne Zerstörung des Steins in seine Ausgangsform zurückgeht, wenn die Biegebelastung zurückgenommen wird. Ein solcher Steinstab kann weitaus billiger hergestellt werden, als ein Metallrohr mit gleichen Eigenschaften. So entstehen Bauträger unterschiedlicher Formen für unterschiedlichster Formen für unterschiedlichste Einsatzgebiete.

Als biegebelasteter Träger am Bau, stabilisierte Fassadenverkleidungen und Bodenbelag im Außen- und Innenbereich, gebogene Steinplatten im Innenund Außenbereich, selbsttragendes Bauteil im Maschinenbau, Fahrzeug-, Flugzeug- und Schiffsbau, sowie witterungsbeständige Verkleidung derselben, sowie in allen thermischen Belastungsfällen, wie zum Beispiel Kaminaussenverkleidungen aus Stein kann der neue Werkstoff Anwendung finden. Gebogene Steinplatten können insbesondere im Innerbereich für Küchen- und Badverkleidungen, z.B. an runden Badewannen, Anwendung finden. Auch thermisch belastete Oberflächen von Haushaltgeräten wie Toastern oder Kaffeemaschinen lassen sich so rissfrei mit Stein verkleiden. Weitere Anwendungen ergeben sich für den Bau von erdbebensicheren Bauteilen für Häuserkonstruktionen, sowie im Baubereich, der Bau von neuartigen Skiern, Snowboards, Masten und Bäume von Segelschiffen, Gestänge von Sportflugzeugen und Kränen, sowie deren Lastarme.

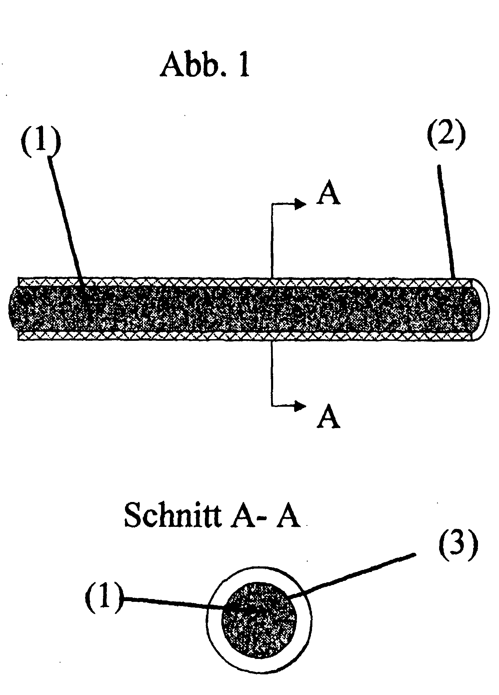

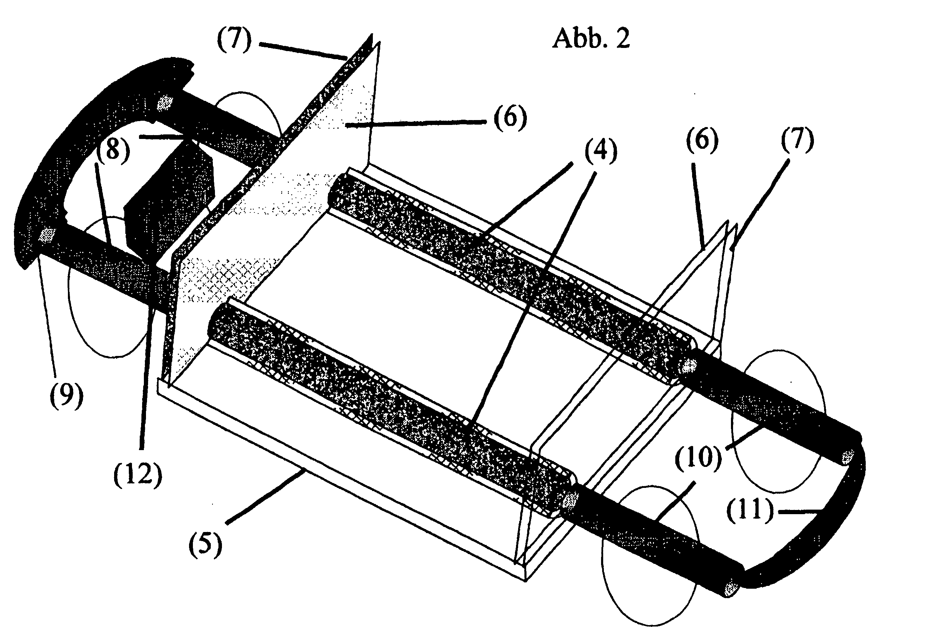

Eine der vielen möglichen Ausführungen der Erfindung beschreibt einen runden oder rechteckigen Stab aus Stein (1), der in Längsrichtung und Querrichtung mit einem Carbonfaserroving (2) stabilisiert wird (Abb. 1). Die Verbindung zwischen Stein und Faser wird durch eine temperaturstabile Epoxidharzmatrix (3) hergestellt, welche sich je nach Einsatzgebiet entsprechend thermisch stabil belasten lässt. Je höher die Temperatur des Laminats wird, desto höher wird die Vorspannung durch die sich zusammenziehende Carbonfaser und damit die Stabilität des Trägers, da der Stein so gut wie unbegrenzt druckbelastbar ist.
Die somit entstandenen Träger (4) werden, dargestellt in Abb 2, in eine Fahrzeug-Bodengruppe (5) aus z.B. Carbonfaserlaminat geklebt. Zwei Querwände, die aus einer mit Carbonfaserlaminat (6) stabilisierten Steinplatte (7) bestehen, werden als abschließende Aufprallversteifungen vom und hinten als Abschluss des Fahrgastzellenbereichs an den Träger (4) geklebt, um einerseits eine gute Verwindungssteifigkeit des Fahrzeugs zu erzielen und andererseits den Fußraum des Fahrers und Beifahrers vor Zerstörung beim Aufprall auf ein Hindernis zu schützen. An diese Querwände werden nun die den eigentlichen Aufprall dämpfenden Längsträger (8) im Motorraum verschraubt, die ihrerseits aus Metall bestehen, den vorderen Aufbau des Fahrzeugs, den Motorblock (12) und die Vorder-Stoßstange (9) halten und welche sich beim Aufprall zusammenschieben, um die Energie des Aufpralls aufzunehmen und einen Schock auf die Querwand (7) nach Möglichkeit zu dämpfen. Dasselbe gilt für die beiden Stahldämpfer (10) im Heck des Fahrzeugs, die den Kofferraum, den Heckaufbau des Fahrzeugs und die Rück-Stoßstange (11) halten.
Je höher das Laminat erhitzbar ist und unter dieser Hitzeeinwirkung aushärtet und den Spannungs-Zustand damit bei einer bestimmten Temperatur "einfriert", desto höher ist die später erreichbare Vorspannung und um so höher damit die Belastbarkeit der Verbindung.

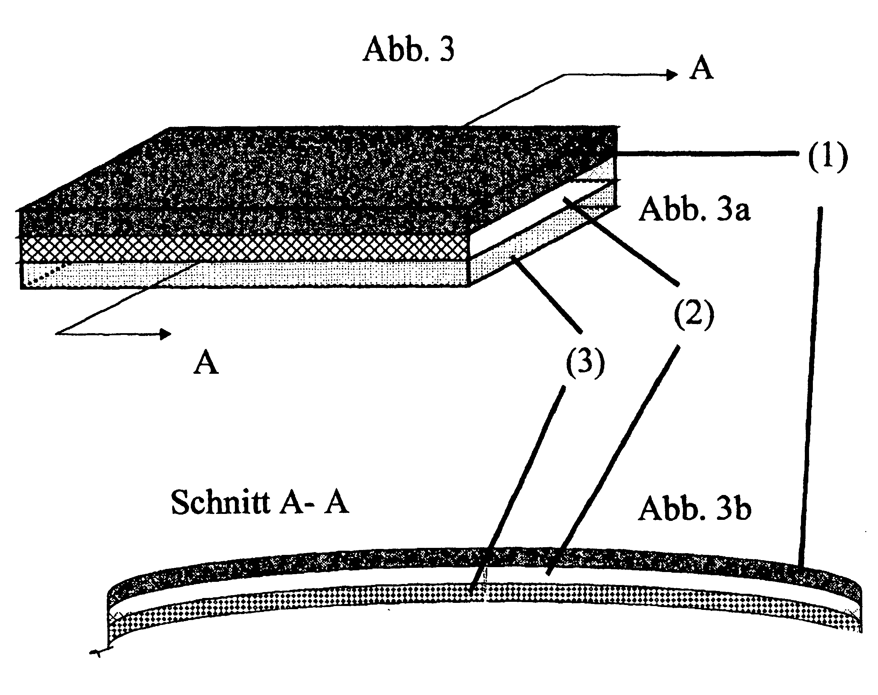

Ganz neue Verhaltensweisen dieser Verbindung werden bei einer anderen, 2. Ausführung der Erfindung, dargestellt in Abb. 3, erreicht, wenn Fasern in unterschiedlichen Schichten gemischt werden, und zwar solche, die sich bei Temperaturerhöhung zusammenziehen und solche, die sich bei Temperaturerniedrigung zusammenziehen. Mit dieser Mischung können weite Temperaturbereiche sicher abgedeckt werden, ohne auf wohl definierte Zugvorspannung zur Stabilisierung des Steins verzichten zu müssen. Auf diese Weise kann der Stein beim Abkühlen nach dem matrixerhärtenden Tempern sogar eine "natürliche" Biegung erfahren ohne zerstört zu werden, wenn die Vorspannung ausreicht.

Durch diese Vorspannung wird ein Vorverziehen des Gesamtverbundes Stein/Carbonfaserlaminat erreicht, bei dem sich der Verbund quasi selbst in die Biegung zieht. Dazu muss die Konstruktion des Laminats, Matrix und Fasern, entsprechend ausgelegt werden. Zu berücksichtigen ist hierbei insbesondere die maximale Temperatur und die jeweilige Orientierung der Fasern, bei denen das Laminat aushärtet, denn diese Temperatur und die Faserrichtung bestimmt nach dem Abkühlen den Grad der sich einstellenden Biegung, bzw. den Biegeradius.

In der oben beschriebenen Weise 2. werden im Zusammenhang mit dieser Erfindung also nicht nur Steinstäbe, sondern auch Steinplatten oder Steinbretter (1) einseitig oder beidseitig mit Faserlaminat (2) mit Hilfe einer geeigneten Temperung und Aushärtung des Laminats stabilisiert. Dies wird in Abb.3a gezeigt. Die Steinplatten oder Steinbretter haben beliebige Dicke und werden je nach Dicke der Steinschicht durch Tempern bei hoher Temperatur im Ofen gebogen (Abb. 3b), wobei der Biegeradius von der Dicke des Steinbrettes und von der maximal angewendeten Ofentemperatur abhängt; je dünner die Steinschicht und je höher die Temperatur, desto kleiner der maximale Radius, ohne daß der Stein irreversibel bricht. Die Biegung kann je nach Laminatmischung und Orientierung, sowie zusammenziehender oder ausdehnender Eigenschaft des Laminats bei Temperaturerhöhung oder Temperaturerniedrigung, durch entsprechendes Tempern des Verbundes eingestellt werden.
Abb. 3 zeigt diese zweite Ausführung der Erfindung als eine mehr oder weniger große Steinplatte (1), die auf der Unterseite möglichst ganzflächig mit einer Schicht aus Carbon-Verbundfaser (2) versehen ist, die zusätzlich mit einer S-Glasfaser durchsetzt ist. Das Laminat sollte vor dem Aushärten ausreichend tief in den Stein eindringen. Auf die Schicht aus Carbon-S-Glasfaser-Laminat wird nun eine Schicht aus reinem Carbonfaserliminat (3) aufgebracht, die bewirkt, daß sie sich beim Aushärten während und nach dem Tempern das Carbonfaser-Laminat (3) stärker zusammenzieht, als das Carbon-S-Glas-Laminat (2).
Wie bei einem Bimetall wird der Gesamtverbund beim Abkühlen auf natürliche Weise in die Biegung gezogen. Dieser Effekt ist auch als "Schüsseln" des Steins bekannt, wobei hier das "Schüsseln" als Dauerzustand durch das Carbonfaserlaminat erzwungen und durch das Aushärten der Matrix quasi eingefroren wird. Es ist von Vorteil eine homogene Festigkeit zu haben, d. h. daß die Platte an jeder Stelle gleiche Festigkeitseigenschaften hat. Aus diesem Grunde sollte die Steinplatte, als auch die Faser-Platte von möglichst konstanter Dicke sein. Sonderbeanspruchungen können jedoch erfordern, daß diese in Abhängigkeit der Geometrie variiert werden. So zum Beispiel in Verbindung mit marktüblichen Fassaden-Montagekonstruktionen an den besonders belasteten Stellen, also im Verbindungsbereich von Platte mit einer Befestigungskonstruktion.

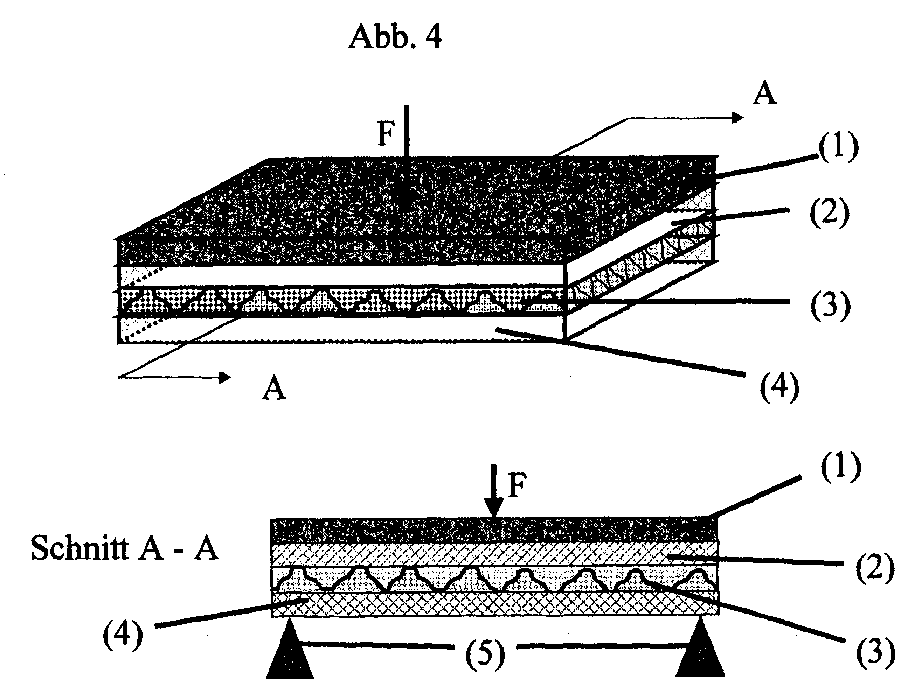

Eine 3. besondere Belastungsform ist für den Fall gegeben, daß eine Steinplatte (1) bei großer Grundfläche und schwerer, punktförmiger Belastung (F) wenig Auflager (5) hat, zum Beispiel, wenn die Steinplatte als frei tragende Treppenstufe im Bodenbereich Anwendung findet, oder wenn fü r Bodenfliesen unzureichende ganzflächig ebene Untergrundbeschaffenheit vorherrscht. Dies wird in Abb. 4 gezeigt. Die Steinplatte wird hier durch ein Carbonfaserlaminat (2) ausdehnungsstabilisiert und durch eine zusätzliche Trägerschicht gegen Durchbiegung stabilisiert, zum Beispiel mit Hilfe einer Folie (3) mit der Geometrie eines "Eierkastens", die mit einer weiteren Trägerplatte (4) aus Carbonfaserlaminat auf der anderen Seite der Folie verbunden ist. Es werden für diese stabilisierende Zwischenschicht (3) Thermoplastfolien herangenommen, die in erwärmtem Zustand in eine Form gezogen werden, so daß ähnlich eines "Eierkasten"-Profils, welches eine bezüglich einer in vertikaler Richtung gedachten Achse symmetrisch ausgebildete Vernoppung aufweist, die für eine sehr hohe Torsionssteifigkeit der Steinplatte sorgt, wenn diese Noppenfolie an den Stirnflächen zwischen zwei Carbonfaserplatten verklebt wird.
Diese Verbindung ist auch unter Hitzeeinwirkung von nur einer Seite absolut formstabil, da die Carbonfaser eine Ausdehnung der einen Seite, auf der zum Beispiel Sonneneinstrahlung auf eine so ausgeführte Treppenstufe einwirkt, nicht zulässt. Aufgrund der außerordentlichen Steifigkeit dieser Verbundanordnung wird eine so ausgeführte Treppenstufe auch extremen Druckbelastungen ohne durchzubiegen formstabil standhalten, sowie Sonnenerwärmung ohne zu reißen standhalten, ohne daß Ausdehnungsgleitlager vorgesehen werden müssen. Die hier beschriebene Bauform ermöglicht also über die Hitze-Formstabilität eine hohe Druck-Formstabilität, die z.B. auch im Fassadenbau extremen Windlasten durch Druck und Zug standhält.

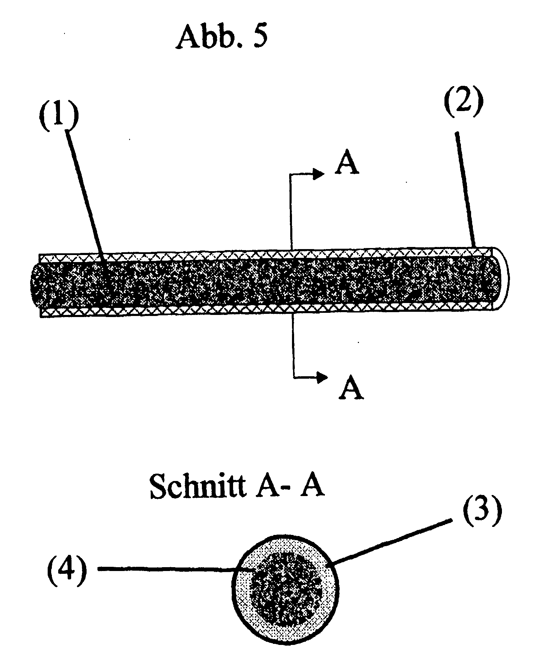

Abb. 5 zeigt einen runden Stab aus Stein (1), der mit einer Carbonfaser (2) direkt so umwickelt ist, daß die Wickelmethode gleich der einer Spule mit Nähgarn ist. Die Faser wird durch eine Matrix (3) stabilisiert, welche in die obere Steinschicht (4) eingedrungen ist. Dieser Stab ist nicht nur extrem biegestabil, sondern nimmt enorme longitudinale Druck-Schockbeiastungen auf, ohne daß der Stein gesprengt wird. Dieser Verbund eignet sich deshalb zum Beispiel besonders gut als stabiler Längsträger im Fahrgastbereich des Fahrzeugunterbodens aus Beispiel 1.

Abb. 6 zeigt einen runden Stab aus Keramik (1), in dessen Außenbereichen Carbonfasern (2) direkt mit eingegossen sind.

## Patentansprüche

1. Anordnung mit einem Stab oder einer Platte oder sonstigen Geometrie aus Stein, Steingut, Kunststein, Keramik, glashaltiges Material, Korallenbaustoff, Perlmut, im folgenden Steingut genannt, welches durch ein großflächig einseitig oder beidseits oder vollständig umhüllend angebrachtes stabilisierendes Fasermaterial und Matrix, im folgenden Träger genannt, stabilisiert wird,
**dadurch gekennzeichnet, daß** der Träger Carbonfaser enthält und einen kleineren Ausdehnungkoeffizenten als das zu tragende Steinmaterial hat.

2. Anordnung nach Anspruch 1, **dadurch gekennzeichnet, daß** die Matrix des Trägers eine Epoxidharz-, Polyesterharz-, Phenolharz-, Polyimidharz-, Cyanatesterharz-, Melaminharz-, Polyurethanharz- oder Silikonharzbasis hat.

3. Anordnung nach Anspruch 1, **dadurch gekennzeichnet, daß** die Matrix eine Keramik- oder Wasserglassbasis hat.

4. Anordnung nach Anspruch 1, 2 und 3, **dadurch gekennzeichnet; daß** der Träger ein Gemisch unterschiedlicher Fasermaterialien in einer Schicht enthält oder aus mehreren Schichten mit jeweils unterschiedlichen Fasermaterialien besteht.

5. Anordnung nach Anspruch 1 bis 4, **dadurch gekennzeichnet, daß** der Träger Keramik und Carbonfaser enthält.

6. Anordnung nach Anspruch 1 bis 5, **dadurch gekennzeichnet, daß** das Fasermatrial des Trägers vollständig aus Carbonfaser besteht.

7. Anordnung nach Anspruch 1 bis 5, **dadurch gekennzeichnet, daß** in einer zusätzlichen Trägerschicht eine Aramidfaser oder Glas- bzw. S-Glas-Faser oder Seidenspinnenfaser oder ein Gemisch derselben enthalten ist.

8. Anordnung nach Anspruch 1 bis 7, **dadurch gekennzeichnet, daß** der in Anspruch 1 beschriebene Gesamtverbund, im folgenden Bauteil genannt, als Längsträger innerhalb der crashsicheren Zone einer Fahrgastzelle eines PKW's fest mit der Bodengruppe des PKW's eingebaut ist.

9. Anordnung nach Anspruch 1 bis 8, **dadurch gekennzeichnet, daß** das Bauteils als Lastarm oder Lastarmelement im Maschinenbau, zur Stabilisierung von Skiern, als Mast oder Baum bei Segelbooten, als Gestänge von Fluggerät aller Art, Last- und Tragarm und Gerüstbauteil, sowie als Bauteil von Kränen Anwendung findet.

10. Anordnung nach Anspruch 1 bis 9, **dadurch gekennzeichnet, daß** diese einseitig stabilisierte Steinplatte auf der Aussenseite eines Boots-, Flugzeugrumpfes oder einer Raumfähre angebracht ist, wobei die Steinseite die äußere Oberfläche bildet.

11. Anordnung nach Anspruch 1 bis 10, **dadurch gekennzeichnet, daß** das Bauteil als Querträger oder Stütze in Häusern eingebaut ist.

12. Anordnung nach Anspruch 1 bis 10, **dadurch gekennzeichnet, daß** das Bauteil als Wandverkleidung im Baubereich, als Fußbodenfliese oder Treppenstufe angebracht ist.

13. Anordnung nach Anspruch 1 bis 10, **dadurch gekennzeichnet, daß** das Bauteil in Bereichen mit großen Temperaturschwankungen als Kaminverkleidung, Gräteverkleidung, besonders Rundverkleidung von Maschinen, Küchengeräten, insbesondere Toastern oder Kaffeemaschinen, Dunstabzugshauben und Kühlschränken, Badverkleidungen, insbesondere von Badewannen und Becken oder Wänden im Bad, und an Möbeln, sowie an Küchengeräten wie Spülmaschinen oder Backöfen, sowie Dekorationsgegenständen angebracht ist.

14. Anordnung nach Anspruch 1 bis 13, **dadurch gekennzeichnet, daß** das Bauteil zusätzlich durch eine weitere Schicht in Form einer Eierkastengeometrie oder anderen Sandwicheinlage, wie z.B. Bienenwabenformen, stabilisiert wird.

15. Anordnung nach Anspruch 1 bis 14, **dadurch gekennzeichnet, daß** das Bauteil bezüglich der Mischung von Fasertyp, deren Orientierung und Matrix so eingestellt wird, daß sich gezielt sowohl ein positiver oder negativer Gesamt-Ausdehnungskoeffizient einstellt.

16. Anordnung nach Anspruch 15, **dadurch gekennzeichnet, daß** der Ausdehnungskoeffizient der Träger, der an einer Seite der Steinplatte angebracht ist, in Abhängigkeit von Dicke und Material des Steinguts so negativ eingestellt ist, daß auch an der dem Träger abgewandten Oberfläche des Steins noch eine solche Vorspannung existiert, die den Stein beim Biegen vor Spaltöffnung an der Oberfläche schützt.

## Claims

1. Arrangement with a rod or a plate or other geometry made from stone, stoneware, synthetic stone, ceramic(s), glass containing material, coral material, perlmutt, in the following called stoneware, which is stabeliszed by a one-sided or both sided sheeted or completely coating fibre material and matrix, in the following called carrier,
**characterized in that** the carrier contains carbon fibre and that the carrier has a smaller coefficient of expansion than the stone material to be stabelized.

2. Arrangement as claimed in claim 1, **characterized in that** the matrix of the carrier is based on an epoxy resin, a polyester resin, a phenolic resin, a Polyimid resin, a Cyanatester resin, a melamin resin, a PU resin or a silicone resin.

3. Arrangement as claimed in claim 1, **characterized in that** the matrix is based on ceramic(s) or water glass.

4. Arrangement as claimed in claim 1, 2 and 3, **characterized in that** the carrier contains a mixture of different fibre materials within a given layer or that the carrier consists of several layers with different fibre materials in each of the layers.

5. Arrangement as claimed in claims 1 to 4, **characterized in that** the carrier contains ceramic(s) and carbon fibre.

6. Arrangement as claimed in claims 1 to 5, **characterized in that** the fibre material of the carrier consists completely of carbon fiber.

7. Arrangement as claimed in claims 1 to 5, **characterized in that** an aramide fibre or a glass or a S-glass-fibre or a silk spider fibre or a mixture of those are contained in an additional layer of the carrier.

8. Arrangement as claimed in claims 1 to 7, **characterized in that** the overall system as claimed in claim 1, in the following called construction unit, is tightly built in into the bottom structure of a passenger cars passengers space zone within the crash-security relevant zone, having the function of a longitudinal reinforcement rod.

9. Arrangement as claimed in claims 1 to 8, **characterized in that** the construction unit finds application as bracket or bracket element in mechanical engineering, in the stabilization of skis, as mast or beam with sailing boats, as linkage of bars with aircraft of all kinds, load and support arm and scaffold construction part, as well as construction unit of cranes.

10. Arrangement as claimed in claims 1 to 9, **characterized in that** the one sided stabilized stone plate is attached on the exterior side of a boat hull, a body of an aircrasft or space shuttle, whereby the stone-side forms the outside surface.

11. Arrangement as claimed in claims 1 to 10, **characterized in that** the construction unit is built in into houses as traverse bracket or supporting pillar.

12. Arrangement as claimed in claims 1 to 10, **characterized in that** the construction unit is attached as wall lining, as floor tile or stairway step within building ranges.

13. Arrangement as claimed in claims 1 to 10, **characterized in that** the construction unit is attached within applications with large variations in temperature such as fire-place lining, lining of machines, particularly round lining of machines, kitchen devices, in particular toasters or coffee machines,vapour hoods and refrigerators, bath linings, in particular of bath tubs and basins or walls in the bath, and at furniture, as well as at kitchen devices such as dishwashers or baking-ovens, as well as decoration articles.

14. Arrangement as claimed in claims 1 to 13, **characterized in that** the construction unit is stabilized additionally by a further layer in form of egg box geometry or other sandwich layer, like for example bee honeycomb forms.

15. Arrangement as claimed in claims 1 to 14, **characterized in that** the construction unit is formed concerning the mixture of type of fiber, its orientation of the fibre and its matrix in such a way, that purposefully both a positive or negative total extension coefficient can be adjusted.

16. Arrangement as claimed in claim 15, **characterized in that** the carriers coefficient of expansion as a function of thickness and actual material of the stoneware, is so negatively adjusted that the pre-tension on the counter side to the attachment of the carrier to the stone plate is that high, that it is able to prevent the stone surface from gap opening at the surface even when bending the stoneware.

## Revendications

1. Dispositif avec une barre ou une plaque ou autre géométrie en pierre, en produit de pierre, en pierre artificielle, en céramique, en matériel de verre, en matériel de corail, du courage de perlage, en suite appelé grès, qui sera stabilisé par un matériel à fibre, qui l'enveloppe largement ou complètement opportun unilatéralement ou de part et d'autre, et matrice, en suite appelée base portante,
**caractérisé en ce que** la base portante contient des fibres de carbone, qui se caractérisent par un coefficient de dilatation mineur à celui du matériel en pierre qui doit être tenue et stabilisé.

2. Dispositif selon revendication 1, **caractérisé en ce que** la matrice de la base portante contient une base de époxy-résine, de résine polyestère, de résine de phénole, de résine polymide, de résine cyanatestère, de résine de mélamine, de résine de polyuréthane ou de résine de silicone.

3. Dispositif selon revendication 1, **caractérisé en ce que** la matrice dispose d'une base de verre soluble ou de céramique.

4. Dispositif selon revendications 1, 2 et 3, **caractérisé en ce que** la base portante contient un mélange de matériaux à fibres différents dans une couche unique ou bien se compose de plusieurs couches avec des matériaux à fibres différents dans la même couche.

5. Dispositif selon revendications 1 à 4, **caractérisé en ce que** la base portante contient de la céramique et de la fibre de carbone.

6. Dispositif selon revendications 1 à 5, **caractérisé en ce que** le matériel fibreu de la base portante se compose complètement de fibre de carbone.

7. Dispositif selon revendication 1 à 5, **caractérisé en ce qu'**une couche portante supplémentaire contient de la fibre de aramide, de verre ou de fibre de verre-S et/ou de verre ou de fibre d'araignée de soie ou un mélange des mêmes.

8. Dispositif selon revendication 1 à 7, **caractérisé en ce que** le groupe total, décrit dans la revendication 1, appelé en suite composant actif, soit solidement inséré comme longerons, en jonction avec le dessous de caisse, dans la zone résistante contre les effets de collision dans la cabine des passagers d'un véhicule à roues.

9. Dispositif selon revendication 1 à 8, **caractérisé en ce que** le composant actif s'applique commr bras de fret ou élément d'un bras de fret dans la construction mécanique, dans la stabilisation de skis, comme mat ou mat de charge pour voiliers, comme tige d'avion de tous types, de bras de transport et de fret et de la partie de construction d'échafaudage, ainsi que comme élément de grues.

10. Dispositif selon revendication 1 à 9, **caractérisé en ce que** cette plaque de pierre stabilisée unilatéralement soit fixée sur la cote extérieur d'un navire, d'un fuselage, d'un véhicule spatial, auquel cas le côté de pierre représente la surface extérieure.

11. Dispositif selon revendication 1 à 10, **caractérisé en ce que** le composant actif soit inséré comme poutre transversale ou appui dans l'achitecture.

12. Dispositif selon revendication 1 à 10, **caractérisé en ce que** le composant actif soit appliqué comme revêtement de parois dans le secteur de construction, comme carreau de plancher ou étape d'escalier.

13. Dispositif selon revendication 1 à 10, **caractérisé en ce que** le composant actif soit appliqué dans des applications avec de grandes variations de température comme revêtement de cheminée, revêtement d'appareils, particulièrement revêtement rondes des appareils, des appareils de cuisine, notamment des toaster ou des cafetières , des hottes d'aspiration ou des refrigérateurs, des revêtements de bain, en particulier des baignoires et des bassins ou des parois dans le bain, et des meubles, ainsi que des appareils de cuisine comme des laves-vaisselle ou des fours, ainsi que des objets de décoration.

14. Dispositif selon revendication 1 à 13, **caractérisé en ce que** le composant soit stabilisé en plus par une autre couche sous la forme d'une géométrie de boîte d'oeuf ou d'autre insertion de repli de sable, comme p. ex. la construction en nid d'abeille.

15. Dispositif selon revendication 1 à 14, **caractérisé en ce que** le composant actif soit ajusté concernant le mélange du type de fibres et concernant leur orientation et concernant le matrice de telle facon, qu'il soit possible d'ajuster un coefficient d'expansion total d'être positif ou négatif.

16. Dispositif selon revendication 15, **caractérisé en ce que** le coefficient de dilatation de la base portante, qui est attachée à un côté de la plaque de pierre, soit ajusté ainsi négativement - dependent de l'épaisseur et du matériel du produit de pierre - , que la pré-tention même au surface de la pierre opposée du côté de la base portante arrive à un tel attelage, que la matiere en pierre soit protectée contre des ruptures à la surface de la pierre.
